# EUROPEAN PATENT APPLICATION

(11) **EP 4 683 430 A1**
(43) Date of publication of application: **21.01.2026**
(21) Application number: 24189062.3
(22) Date of filing: 17.07.2024
(51) Int. Cl.: H05B 45/3725, H02J 9/00, H05B 47/17, H05B 47/185

(54) **DC EMERGENCY DETECTION FOR LOW VOLTAGE-DC SYSTEMS**

(71) Applicant: Tridonic GmbH & Co. KG, 6851 Dornbirn (AT)
(72) Inventor: Marte, Patrick, 6851 Dornbirn (AT); Moosbrugger, Markus, 6851 Dornbirn (AT); Egle, Manuel, 6851 Dornbirn (AT)
(74) Representative: Rupp, Christian

(57) **Abstract**

The present invention provides an emergency lighting unit 10. Said emergency lighting unit 10 comprises input terminals for being supplied by a DC voltage 22, and a control unit 12 configured to monitor said DC voltage 22 and to initiate an emergency lighting operation of lighting means upon a detection of a DC voltage 22 with an amplitude modulated with a fixed frequency. The present invention further provides an AC/DC converter 20 for supplying DC powered LED converter. Said AC/DC converter 20 comprises input terminals for being supplied with a mains voltage 21, output terminals for supplying a constant amplitude DC voltage 22 onto a DC bus 23, a detection circuitry for detecting a failure of the mains voltage 21 at the input terminals, and a modulation circuitry for periodically modulating, with a fixed frequency, the amplitude of the DC voltage 22.

## Description

### TECHNICAL FIELD

The present invention relates to low-voltage direct current (LV-DC) systems, specifically designed for applications such as emergency lighting. It addresses the integration of emergency lighting features into LV-DC systems, eliminating the need for separate dedicated systems for emergency purposes. This invention aims to provide an efficient, cost-effective, and streamlined solution for incorporating emergency lighting functionality within a single LV-DC system.

### BACKGROUND

Emergency lighting systems are crucial for ensuring safety and visibility during power outages or emergency situations. Traditionally, emergency lighting solutions involve complex installations with separate, dedicated LV-DC systems for emergency modes. These systems operate independently from the primary lighting network, leading to increased installation costs and maintenance challenges.

In the context of LV-DC systems, such as track lights and next-generation DC-string lighting systems, there is a significant limitation: the inability to support emergency lighting features directly. Customers who require emergency lighting functionality currently need to set up separate systems dedicated to emergencies. This solution is not only costly but also complicates the overall infrastructure, making it harder to ensure reliability and compliance with safety standards.

### SUMMARY

In view of the above-discussed challenges, the objective of this invention is to develop a comprehensive LV-DC system that integrates emergency lighting functionality without the need for separate dedicated systems. This solution aims to: reduce installation and maintenance costs, simplify system management and operation, and enhance reliability and safety by ensuring seamless transition to emergency lighting during power failures.

These and other objectives are achieved by the solution of this disclosure as described in the independent claims. Advantageous implementations are further defined in the dependent claims.

According to a first aspect of the invention, an emergency lighting unit is provided. The emergency lighting unit comprises input terminals for being supplied by a DC voltage. The emergency lighting unit further comprises a control unit configured to monitor said DC voltage and to initiate an emergency lighting operation of LED lighting means upon a detection of a DC voltage with an amplitude modulated with a fixed frequency.

Advantageously, upon the detection of a specific signaling of the emergency state, namely, the DC voltage with an amplitude modulated with a fixed frequency, any emergency lighting units supplied by the central DC bus will start its emergency lighting operation.

According to an implementation form of the first aspect of the invention, the modulated amplitude of DC voltage is characterized in that the amplitude of the voltage changes periodically.

Advantageously, the relative and repetitive amplitude change on the DC voltage allows an easy detection on an emergency event.

According to a further implementation form of the first aspect of the invention, the modulated amplitude of the DC voltage varies within a range of 20% around an average value, preferably within a range of 10% around the average value.

For instance, a typical DC bus voltage may be 48 V. This voltage can be periodically increased or decreased, toggling between values slightly below and slightly above the nominal 48V. Ideally, the range of these variations is kept narrow, eliminating the need for additional design measures and ensuring that the output voltage remains well below the Safety Extra-Low Voltage (SELV) limit.

According to a further implementation form of the first aspect of the invention, before initiating the emergency lighting operation, the control unit is further configured to detect the fixed frequency, and initiate the emergency lighting operation when the detected frequency matches a predefined frequency.

Optionally, the frequency may be used as an additional parameter for guaranteeing the proper detection of an emergency event and increasing the immunity against distortions and noise.

According to a further implementation form of the first aspect of the invention, the amplitude of the DC voltage is modulated with any of the following signal forms: sine wave, triangular wave, square wave, and sawtooth wave.

Optionally, an easy way to implement the modulated amplitude of the DC voltage is for an AC (alternating current) /DC converter to toggle the DC bus voltage between two defined levels at a constant frequency. Alternatively, other waveforms such as triangular or sine wave modulations are also possible.

According to a second aspect of the invention, an AC/DC converter for supplying a DC-powered LED converter is provided. Said AC/DC converter comprises input terminals for being supplied with a mains voltage, and output terminals for supplying a constant amplitude DC voltage onto a DC bus. Said AC/DC converter further comprises a detection circuitry for detecting a failure of the mains voltage at the input terminals, and a modulation circuitry for periodically modulating, with a fixed frequency, the amplitude of the DC voltage.

Advantageously, when detecting an AC failure at its input terminals, said AC/DC converter starts modulating the DC bus voltage with a defined and preferably fixed frequency. This overcomes the issue that in an emergency case when the mains voltage fails, the control line to the DC modules (e.g., LED converters) will typically be disabled. Therefore, the information about the emergency case can not be signalized via the control line to the DC modules.

According to an implementation form of the second aspect of the invention, the output terminals are configured to supply the modulated amplitude of the DC voltage onto the DC bus upon the detection of the failure of the mains voltage.

Advantageously, such the modulated DC voltage can be used as a specific signal of the emergency state for indicating any emergency lighting units.

According to a further implementation form of the second aspect of the invention, the modulated amplitude of the DC voltage varies within a range of less than 20% around an average value, preferably within a range of less than 15% around the average value.

Advantageously, the range of the voltage change is restricted to a narrow range, eliminating the need for additional design measures and ensuring that the output voltage remains well below the SELV limit.

According to a further implementation form of the second aspect of the invention, the modulation circuitry is configured to modulate the amplitude of the DC voltage in accordance with a periodic signal, wherein the periodic signal comprises one of the following: sine wave, triangular wave, square wave, and sawtooth wave.

Optionally, an easy way to implement the modulated amplitude of the DC voltage is for the AC/DC converter to toggle the DC bus voltage between two defined levels at a constant frequency. Alternatively, other waveforms such as triangular or sine wave modulations are also possible.

According to a further implementation form of the second aspect of the invention, the AC/DC converter is powered by a battery in order to supply the modulated DC voltage in case of the failure of the mains voltage.

Advantageously, the battery allows the AC/DC converter continuing the signaling to the emergency lighting units even when the AC voltage at its input terminals fails (for example switched off).

According to a third aspect of the invention, a system is provided. Said system comprises one or more emergency lighting units according to the first aspect of the invention or any of its implementation forms, and an AC/DC converter according to the second aspect of the invention or any of its implementation forms.

Implementation forms of the system of the third aspect may correspond to the implementation forms of the emergency lighting unit of the first aspect described above, and/or correspond to the implementation forms of the AC/DC converter of the second aspect described above. The system of the third aspect and its implementation forms achieve the same advantages and effects as described above for the emergency lighting unit of the first aspect and its implementation forms, and/or the AC/DC converter of the second aspect and its implementation forms.

According to an implementation form of the third aspect of the invention, the system further comprises LED lighting means supplied by the emergency lighting unit.

According to a further implementation form of the second aspect of the invention, each emergency lighting unit is associated with a battery for powering the LED lighting means in the emergency operation state.

Optionally, the emergency lighting operation may be powered by a central battery supplying the central AC/DC converter.

Alternatively, a decentralized DC voltage supply, such as individual batteries in each emergency lighting unit, may also be implemented. In another example, a combination of power sources can be implemented, where some emergency lighting units are powered by the central battery and others have their own individual batteries.

According to a fourth aspect of the invention, a method for signaling an emergency lighting state from an AC/DC converter to one or more emergency lighting units supplied with a DC voltage by the AC/DC converter is provided. Said method comprises the step of periodically modulating, with a fixed frequency, the amplitude of the DC voltage.

Implementation forms of the method of the fourth aspect may correspond to the implementation forms of the AC/DC converter of the second aspect described above. The method of the fourth aspect and its implementation forms achieve the same advantages and effects as described above for the AC/DC converter of the second aspect and its implementation forms.

According to an implementation form of the fourth aspect, the method further comprises the step of detecting a failure of a mains voltage for supplying the AC/DC converter, and outputting the modulated amplitude of the DC voltage onto a DC bus for supplying the one or more emergency lighting units, upon a detection of the failure of the mains voltage.

All steps that are performed by the various components described in this application, as well as the functionalities described to be performed by the various components, are intended to mean that the respective component is adapted to or configured to perform the respective steps and functionalities. Even if, in the following description of specific embodiments, a specific functionality or step to be performed by external components is not reflected in the description of a specific detailed element of that component that performs that specific step or functionality, it should be clear to a skilled person that these methods and functionalities can be implemented in respective software or hardware elements, or any kind of combination thereof.

### BRIEF DESCRIPTION OF DRAWINGS

The above-described aspects and implementation forms are now further explained with respect to the drawings by way of example only, and not for limitation. In the drawings:
- Fig. 1: shows an exemplary LV-DC system according to an embodiment of this invention;
- Fig. 2: shows an exemplary modulated bus voltage according to an embodiment of this invention; and
- Fig. 3: shows a method according to an embodiment of this invention.

### DETAILED DESCRIPTION OF EMBODIMENTS

Illustrative embodiments of an emergency lighting unit, an AC-DC converter, a system, and a method are described with reference to the figures. Although this description provides a detailed example of possible implementations, it should be noted that the details are intended to be exemplary and in no way limit the scope of the application.

An embodiment/example may refer to other embodiments/examples. For example, any description including but not limited to terminology, element, process, explanation, and/or technical advantage mentioned in one embodiment/example is applicable to the other embodiments/examples. The same elements are labeled with the same reference signs and may function similarly or likewise.

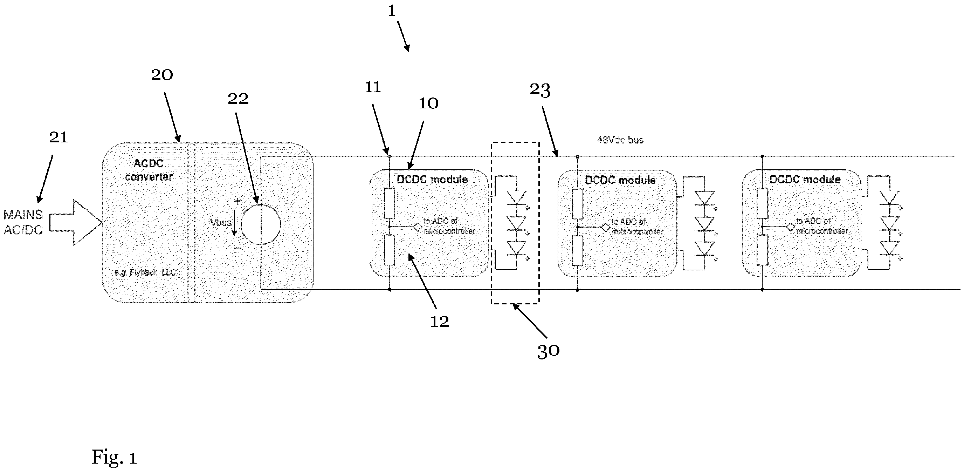

With respect to Fig. 1, a circuit diagram of an exemplary embodiment of an emergency lighting unit 10 is illustrated.

In accordance with Fig. 1, the emergency lighting unit 10 comprises input terminals 11 for being supplied by a DC voltage 22, and a control unit 12 configured to monitor said DC voltage 22 and to initiate an emergency lighting operation of LED lighting means 30 upon a detection of a DC voltage 22 with an amplitude modulated with a fixed frequency.

The present invention is especially in the field of emergency lighting units, where an emergency case is detected when the AC voltage is switched off or is no longer in a correct state. It can be understood that the DC-supplied lighting units are not able to directly detect this failure of the AC mains voltage, which only occurs at the input terminals of the central AC/DC converter.

In order to solve this problem, the invention proposes to implement a DC voltage with an amplitude modulated with a fixed frequency, as the special signaling for indicating an emergency event.

Advantageously, the modulated amplitude of DC voltage is characterized in that the amplitude of the voltage changes periodically. The relative and repetitive amplitude change on the DC voltage allows an easy detection on an emergency event.

Upon the signaling of the emergency state by modulating the DC bus voltage, any emergency lighting units 10 supplied by the central DC bus will start its emergency lighting operation. In a preferred embodiment, the emergency lighting operation is powered by a central battery supplying the central AC/DC converter with DC voltage.

Alternatively, a decentralized DC voltage supply, such as individual batteries in each emergency lighting unit, may also be implemented. In another example, a combination of power sources can be implemented, where some emergency lighting units are powered by the central battery and others have their own individual batteries.

According to an embodiment of the invention, the modulated amplitude of the DC voltage varies within a range of 20% around an average value, preferably within a range of 10% around the average value.

For instance, a typical DC bus voltage may be 48 V. This voltage can be periodically increased or decreased, toggling between values slightly below and slightly above the nominal 48 V. Ideally, the range of these variations is kept narrow, eliminating the need for additional design measures and ensuring that the output voltage remains well below the SELV limit.

Notably, the emergency lighting unit 10 is described as "DCDC" module in the figure, as it converts one DC voltage level to another. It regulates the input voltage to a suitable level for the connected components, i.e., the connected LED lighting means 30. Input Terminals 11 receive the incoming DC voltage 22 that needs to be converted. The output of the emergency lighting unit 10 is connected to the load, which in this diagram is shown as a series of LEDs. The output from the DC/DC module powers the array of LEDs.

In one exemplary embodiment, the control unit 12 may comprises resistors, which are used for voltage sensing, and providing feedback to the DC/DC module.

Optionally, the DC/DC module may be connected to an Analog-to-Digital Converter (ADC) of a microcontroller, as shown in Fig. 1. This connection allows the microcontroller to monitor the output voltage of the DC/DC module for control or measurement purposes.

According to an embodiment of the invention, before initiating the emergency lighting operation, the control unit 12 is further configured to detect the fixed frequency, and initiate the emergency lighting operation when the detected frequency matches a predefined frequency.

Advantageously, the frequency may be used as an additional parameter for guaranteeing the proper detection of an emergency event and increasing the immunity against distortions and noise.

For the sake of completeness, it is noted that said Fig. 1 also depicts an exemplary embodiment of a system 1 comprising one or more said emergency lighting units 10 and an AC/DC converter 20 for supplying DC powered LED converter. Possibly, the system 1 may be a LV-DC rail mount system.

This system typically comprises a mains AC power source 21, an AC/DC converter 20, a number of LV-DCDC modules 10 connected to the AC/DC converter 20, and a bus 23 for distributing DC power to the number of LV-DCDC modules.

The primary power supply for the system, is typically 120 V or 230 V AC depending on the region. The AC/DC converter 20 converts the high-voltage AC power to a safe low-voltage DC power, usually between 12V and 48V DC, so as to ensure stable and efficient power delivery to the rail mount system.

In accordance with Fig. 1, the AC/DC converter 20 comprises input terminals for being supplied with a mains voltage 21, and output terminals for supplying a constant amplitude DC voltage 22 onto a DC bus 23.

Typically, the AC/DC converter converts an input AC or DC voltage from the mains supply into a regulated DC voltage suitable for powering downstream components.

Said AC/DC converter 20 comprises a detection circuitry (not shown in the figure) for detecting a failure of the mains voltage 21 at the input terminals, and a modulation circuitry (not shown in the figure) for periodically modulating, with a fixed frequency, the amplitude of the DC voltage 22.

Notably, the output terminals are configured to supply the modulated amplitude of the DC voltage 22 onto the DC bus 23 upon the detection of the failure of the mains voltage 21.

According to an embodiment of the present invention, the modulated amplitude of DC voltage 22 is characterized in that the amplitude of the voltage changes periodically.

In an emergency case when the mains of the AC/DC converter 20 switches from AC to DC supply typically the control line (e.g., DALI) to the DC/DC modules will be disabled. Therefore, the information about an emergency case can not be signalized via the control line to the DC/DC modules.

For instance, a typical DC bus voltage may be 48 V. Just stepping up/down the 48 V DC bus voltage to another (constant) level is not a practicable solution because of voltage drops on the line to the DC/DC modules, making it challenging, or even impossible to define fixed voltage levels.

The present invention proposes to overcome this issue by modulating the DC Bus voltage (e.g., in a rectangular/triangular/sine or other waveform) as an indication signal for the attached DC/DC modules.

According to an embodiment of the invention, the modulated amplitude of the DC voltage varies within a range of 20% around an average value (e.g., the typical 48 V DC bus voltage), preferably within a range of 10% around the average value.

Advantageously, the range of the voltage change is restricted to a narrow range, eliminating the need for additional design measures and ensuring that the output voltage remains well below the SELV limit.

An easy way to implement the modulated amplitude of the DC voltage is for the AC/DC converter 20 to step the DC bus voltage between two defined levels at a constant frequency Other waveforms like triangular or sine modulations are also possible.

According to an embodiment of the invention, the modulation circuitry is configured to modulate the amplitude of the DC voltage in accordance with a periodic signal, wherein the periodic signal comprises one of the following: sine wave, triangular wave, square wave, and sawtooth wave.

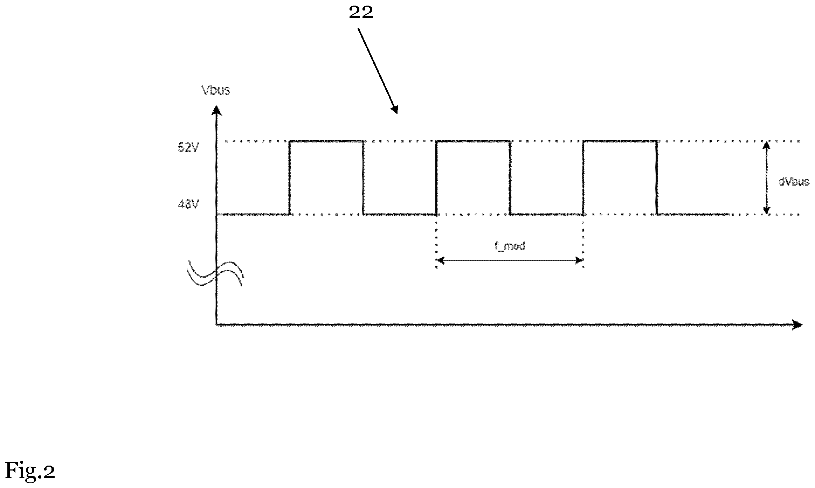

As an example, the AC/DC converter 20 could toggle the DC-Bus level between 48 V and 52 V, resulting in a delta bus voltage of 4 V with a defined frequency f_{_mod} as shown in Fig. 2.

By toggling the bus voltage in such a narrow range (e.g. less than 20% of the average DC level) no additional design or protection measures are needed for the DCDC modules and there are still enough margin to the SELV voltage limit is given for the AC/DC converter 20.

The emergency lighting unit 10 internally monitors the DC Bus voltage (e.g., using the voltage divider connected to ADC of the microcontroller). When it detects the relative and repetitive voltage change on the DC Bus voltage as shown in Fig. 2, the emergency lighting unit 10 is informed about the emergency event.

To properly determine an emergency event, the DCDC may monitor the relative bus voltage change and additionally the frequency of the modulation. By not just looking at the amplitude change but also the frequency, an additional parameter is introduced thereby guaranteeing a proper detection of an emergency event and increasing the immunity against distortions and noise.

Detecting the DC Bus voltage modulation as mentioned allows the emergency lighting unit 10 to change into DC-Emergency mode (e.g., go to emergency Dim-Level).

Typically, the AC/DC converter 20 is supplied by a backup voltage, such for example a battery, in order to continue this signaling even when the AC voltage at its input terminals fails (for example switched off).

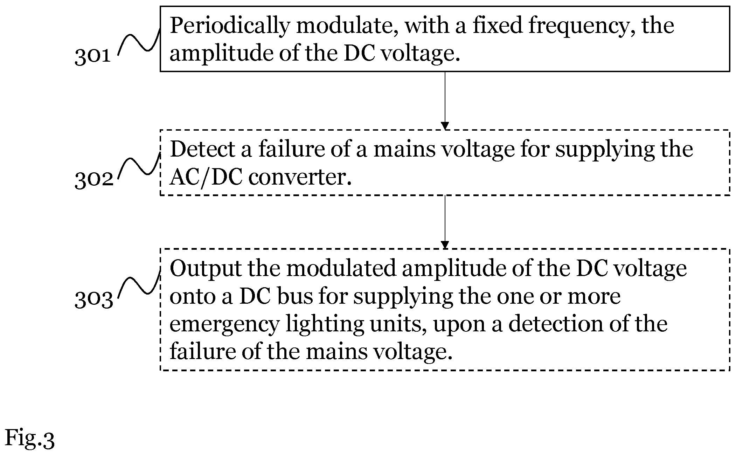

Fig. 3 shows a method according to an embodiment of this invention. The method of FIG. 1 is an example of the method of the fourth aspect of this disclosure. The description of the method of the fourth aspect is correspondingly valid for the method of FIG. 3.

The method of Fig. 3 is a method for signaling an emergency lighting state from an AC/DC converter to one or more emergency lighting units supplied with a DC voltage by the AC/DC converter. As shown in Fig. 3, the method comprises a step 301 of periodically modulating, with a fixed frequency, the amplitude of the DC voltage. In one example, the method is performed by the AC/DC converter shown in Fig. 1.

Optionally, the method further comprises a step 302 of detecting a failure of a mains voltage for supplying the AC/DC converter. The method further comprises a step 303 of outputting the modulated amplitude of the DC voltage onto a DC bus for supplying the one or more emergency lighting units, upon a detection of the failure of the mains voltage.

While various embodiments of the present invention have been described above, it should be understood that they have been presented by way of example only, and not limitation. Numerous changes to the disclosed embodiments can be made in accordance with the disclosure herein without departing from the spirit or scope of the invention. Thus, the breadth and scope of the present invention should not be limited by any of the above described embodiments. Rather, the scope of the invention should be defined in accordance with the following claims and their equivalents.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

## Claims

1. An emergency lighting unit (10) having:
- input terminals (11) for being supplied by a DC voltage (22), and
- a control unit (12) configured to monitor said DC voltage (22) and to initiate an emergency lighting operation of LED lighting means (30) upon a detection of a DC voltage (22) with an amplitude modulated with a fixed frequency.

2. The emergency lighting unit (10) according to claim 1, wherein the modulated amplitude of DC voltage (22) is **characterized in that** the amplitude of the voltage changes periodically.

3. The emergency lighting unit (10) according to claim 1 or 2, wherein the modulated amplitude of the DC voltage (22) varies within a range of less than 20% around an average value, preferably within a range of less than 15% around the average value.

4. The emergency lighting unit (10) according to any of the preceding claims, before initiating the emergency lighting operation, the control unit (12) is further configured to:
detect the fixed frequency, and
initiate the emergency lighting operation when the detected frequency matches a predefined frequency.

5. The emergency lighting unit (10) according to any of the preceding claims, wherein the amplitude of the DC voltage (22) is modulated with any of the following signal forms: sine wave, triangular wave, square wave, and sawtooth wave.

6. An AC/DC converter (20) for supplying DC powered LED converter, comprising:
input terminals for being supplied with a mains voltage (21),
output terminals for supplying a constant amplitude DC voltage (22) onto a DC bus (23),
a detection circuitry for detecting a failure of the mains voltage (21) at the input terminals, and
a modulation circuitry for periodically modulating, with a fixed frequency, the amplitude of the DC voltage (22) .

7. The AC/DC converter (20) according to claim 6, wherein the output terminals are configured to supply the modulated amplitude of the DC voltage (22) onto the DC bus (23) upon the detection of the failure of the mains voltage (21).

8. The AC/DC converter (20) according to claim 6 or 7, wherein the modulated amplitude of the DC voltage (22) varies within a range of less than 20% around an average value, preferably within a range of less than 15% around the average value.

9. The AC/DC converter (20) according to any of the preceding claims, wherein the modulation circuitry is configured to modulate the amplitude of the DC voltage (22) in accordance with a periodic signal, wherein the periodic signal comprises one of the following: sine wave, triangular wave, square wave, and sawtooth wave.

10. The AC/DC converter (20) according to any of the preceding claims, wherein the AC/DC converter (20) is powered by a battery in order to supply the modulated DC voltage (22) in case of the failure of the mains voltage (21) .

11. A system (1) comprising one or more emergency lighting units (10) according to one of the claims 1 to 6, and an AC/DC converter (20) according to one of the claims 6 to 10.

12. The system (1) according to claim 11, further comprising LED lighting means (30) supplied by the emergency lighting unit (10).

13. The system (1) according to claim 11 or 12, wherein each emergency lighting unit (10) is associated with a battery for powering the LED lighting means (30) in the emergency operation state.

14. A method for signaling an emergency lighting state from an AC/DC converter (20) to one or more emergency lighting units (10) supplied with a DC voltage (22) by the AC/DC converter (20), the method comprising the step of:
periodically modulating (301), with a fixed frequency, the amplitude of the DC voltage (22).

15. The method according to claim 14, further comprising:
detecting (302) a failure of a mains voltage (21) for supplying the AC/DC converter (20), and
outputting (303) the modulated amplitude of the DC voltage (22) onto a DC bus (23) for supplying the one or more emergency lighting units (10), upon a detection of the failure of the mains voltage (21).
